# EUROPEAN PATENT APPLICATION

(11) **EP 1 993 235 A1**
(43) Date of publication of application: **19.11.2008**
(21) Application number: 07785133.5
(22) Date of filing: 18.07.2007
(51) Int. Cl.: H04L 12/28

(54) **METHOD, TERMINAL, DEVICE AND SYSTEM FOR OBTAINING THE ID INFORMATION OF AN APPLICATION SERVER**

(30) Priority: 20.10.2006 CN 200610140279
(71) Applicant: Huawei Technologies Co., Ltd., Shenzhen, Guangdong Province 518129 (CN)
(72) Inventor: LIN, Fei Huawei Administration Building, Shenzhen Guangdong Province 518129 (CN)
(74) Representative: Pfenning, Meinig & Partner GbR
(86) International application number: PCT/CN2007/002191
(87) International publication number: WO 2008/049300

(57) **Abstract**

A method, a terminal, a device and a system for obtaining the ID information of an application server, are used to solve the problem in the prior art that a terminal can not automatically obtain the ID information of a target application server. The first device sends an ID request to the second device; and the second device returns the ID information of the target application server to the first device. The terminal as the first device may automatically obtain the ID information of a target application server, and users' experience satisfaction will be increased.

## Description

### Field of the Invention

The present invention relates to the technical field of network communications, and in particular, to a method, a terminal, a device and a system for obtaining ID information of an application server.

### Background of the Invention

As a Next Generation Converged Network, Internet protocol Multimedia Subsystem (IMS) enables an operator to rapidly and efficiently dispose various converged multimedia services with the service innovation as the driving force. When a terminal user experiences multimedia services, the ID information of the application server needs to be filled in by the terminal user. For example, when a user carries out PTT over Cellular (PoC) service, Message service and Conference service, the ID information of the corresponding application server needs to be provided.

At present, when a terminal user experiences a certain service which requires the ID information of the application server, the terminal user may obtain the ID information of the corresponding application server on a web site provided by the operator via Portal and then manually input the ID information of the application server as configuration information during the running of a program.

The inventors find that, after the ID information of the application server is obtained by the above technical solution, the terminal user needs to manually input the ID information of the application server, and the terminal user may feel inconvenient. Moreover, because the format of the ID information of the application server has a rather high degree of specialization, such as sip:poc-factory@example.com. It is difficult for the terminal user to understand the format and correctly input the ID information of the application server, and the terminal user may feel more inconvenient. Furthermore, if the ID information of the application server changes, the terminal user is unable to correctly experience the multimedia service. At this point, the terminal user needs to reobtain the ID information of the application server on a web site provided by the operator via Portal and then again manually input the ID information of the application server as the configuration information during the running of the program. This is extremely troublesome for the terminal user. As a result, the terminal user experience will be bad.

### Summary of the Invention

The invention provides a method, a terminal, a device and a system for obtaining ID information of an application server, so as to solve the problem of the prior art that a terminal user cannot automatically obtain the ID information of a target application server.

To solve the above technical problem, the invention provides a method for obtaining ID information of an application server, including:

sending, by a first device, an ID request to a second device; and

returning, by the second device, ID information of a target application server to the first device.

The invention further provides a system for obtaining ID information of an application server, including:

a first device, which includes an ID request module and is adapted to send an ID request to a second device; and

the second device, which includes a processing module and is adapted to return ID information of a target application server to the first device..

The invention further provides a terminal, including a module adapted to run an application, and the terminal further includes an ID request module adapted to send an ID request according to the application.

The invention further provides a device, including a second receiving module adapted to receive information, and the device further includes a processing module adapted to send ID information of a target application server according to an ID request received by the second receiving module.

In the invention, by sending the ID request to the second device, the first device may automatically obtain the ID information of the target application server, so that a user does not need to manually input the complex and complicated ID information of the application server when experiencing a service in which the ID information of the corresponding application server needs to be provided. Therefore, the user experience satisfaction may be improved.

### Brief Description of the Drawings

Figure 1 is a flow chart of the process in which a user terminal obtains the ID information of an application server according to the first embodiment of the invention;

Figure 2 is a flow chart of the process in which a user terminal verifies the obtained ID information of the application server with the target application server according to the first Embodiment of the invention;

Figure 3 is a flow chart of the process in which a user terminal obtains the ID information of an application server according to the second embodiment of the invention;

Figure 4 is a flow chart of the process in which a user terminal obtains the ID information of an application server according to the third embodiment of the invention;

Figure 5 is a flow chart of the process in which a user terminal verifies the obtained ID information of the application server with a concentrate server;

Figure 6 is a flow chart of the process in which a user terminal obtains the ID information of an application server according to the fourth embodiment of the invention;

Figure 7 is a block diagram of the system for obtaining the ID information of an application server according to one embodiment of the invention; and

Figure 8 is a schematic block diagram of a concentrate server which acts as the second device according to one embodiment of the invention.

### Detailed Description of the Embodiments

In the invention, a first device sends an ID request to a second device, and the second device returns ID information of the target application server to the first device.

The invention will now be further illustrated in conjunction with the drawings and embodiments.

Embodiment 1

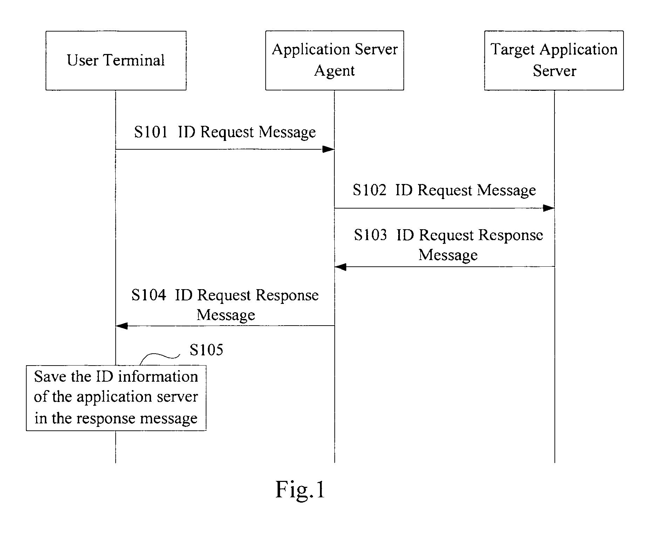

In this embodiment, a user terminal which acts as the first device, obtains the ID information of a target application server by sending an ID request to an application server corresponding to the type of the requested application, i.e., the target application server. In this embodiment, the target application server acts as the second device. When the user activates an application which requires the ID information of corresponding application server, Referring to Figure 1, the process in which the user terminal obtains the ID information of the application server is illustrated, and the process includes the following blocks.

Block S101: A user terminal sends an ID request message carrying the information of the application type, to an application server agent.

Block S102: After the application server agent receives the ID request message, the application server agent forwards the ID request message to the application server corresponding to the application type, i.e., the target application server, according to the information of the application type carried in the ID request message.

The application server agent is a representative of application servers corresponding to different application types. After the application server agent receives the ID request message, the application server agent may determine the application server corresponding to the application type according to the information of the application type carried in the ID request message, and forward the ID request message to the application server corresponding to the application type.

Block S103: The target application server returns an ID request response message carrying the ID information of the target application server, to the application server agent.

Block S104: The application server agent forwards the response message to the user terminal.

Block S105: After the user terminal receives the response message, the user terminal resolves and saves the ID information of the application server.

The above process may also be performed when the user terminal initiates the first service request after the application is activated. In such a case, the ID request message may be the current service request message or another ID request message. After the user terminal obtains the ID information of the application server, the user terminal may directly interact with the application server during a subsequent service.

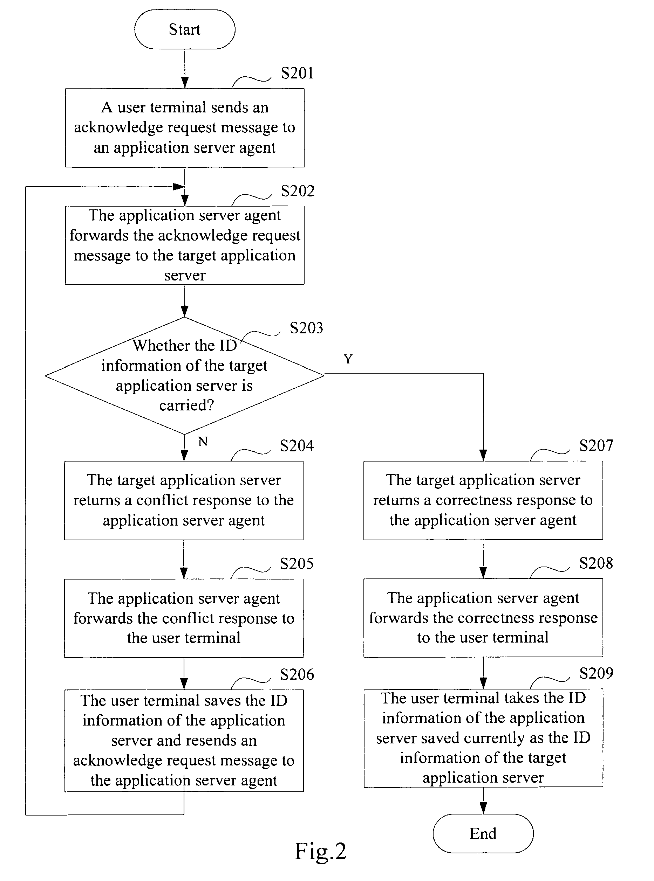

After the user terminal obtains the ID information of the application server, the user terminal may take the ID information of the application server as a correct ID information of the application server corresponding to the application type requested by the user terminal. Alternatively, in order to guarantee the correctness of the ID information of the application server obtained by the user terminal, the user terminal may verify with the target application server whether the ID information is correct after obtaining the ID information of the application server. In this embodiment, Figure 2 shows the process in which the user terminal verifies the obtained ID information of the application server with the target application server, and includes the following blocks.

Block S201: A user terminal sends a verification request message carrying the ID information of the application server resolved by the user terminal and the information of the application type corresponding to the application, to an application server agent.

Block S202: After the application server agent receives the verification request message, the application server agent forwards the verification request message to the target application server according to the information of the application type carried in the verification request message.

Block S203: After the target application server receives the verification request message, the target application server resolves and determines whether the ID information of the application server is carried in the verification request message. If the ID information of the application server is carried in the verification request message, the process turns to Block S207; otherwise, the process turns to Block S204.

Block S204: The target application server returns a conflict response carrying the ID information of the application server, to the application server agent.

Block S205: The application server agent forwards the conflict response to the user terminal.

Block S206: The user terminal resolves and saves the ID information of the application server carried in the conflict response, and resends a verification request message carrying the ID information of the application server resolved by the user terminal and the information of the application type corresponding to the application, to the application server agent. Then, the process turns to Block S202.

Block S207: The target application server returns a correctness response to the application server agent.

Block S208: The application server agent forwards the correct response to the user terminal.

Block S209: The user terminal takes the ID information of the application server saved currently as the ID information of the target application server.

According to the above verifying process, if the target application server does not return the correctness response to the user terminal, the user terminal sends the verification request to the application server continually. During the specific implementation, the times that the user terminal is allowed to initiate the verification request may be limited, for example, 3 times. If no correctness response is obtained after the user terminal sends the verification request to the application server for 3 times, the user terminal may regard that error occurs in the application server agent, the application server or the network transmission and pause requesting the ID information from the target application server, or, the user terminal may directly regard that the ID information of the application server saved locally is correct, etc.

During the implementation, the conflict response may not carry the ID information of the application server, thus the conflict response is only used to notify the user terminal that the ID information of the application server carried in the verification request message is incorrect. Moreover, the verifying process will not be cycled, and will be ended after the user terminal receives the conflict response or the correctness response. After the user terminal determines that the ID information of the application server carried in the verification request message is correct or not, the user terminal may determine, as required, whether to send an ID request message to the target application server again so as to obtain the ID information.

Embodiment 2

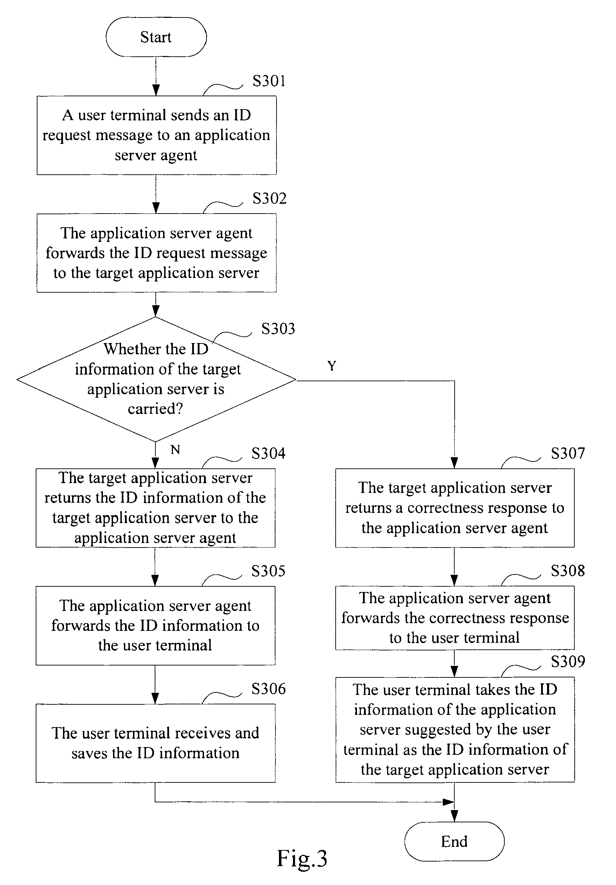

In this embodiment, when a user terminal which acts as the first device obtains the ID information of a target application server which acts as the second device, the user terminal carries the ID information of the application server suggested by the user terminal in the ID request message. Figure 3 shows the process in which the user terminal obtains the ID information of the application server in this embodiment, and includes the following blocks.

Block S301: A user terminal sends an ID request message carrying the information of the application type corresponding to the application and the ID information of the application server suggested by the user terminal, to an application server agent.

The ID information of the application server suggested by the user terminal, such as sip:wrongname@example.com, may be the ID information of the initial application server of the user terminal or the ID information of the application server which is saved by the user terminal and obtained when the application is run for the last time. The ID information of the initial application server may be generated automatically by the user terminal.

Block S302: After the application server agent receives the ID request message, the application server agent forwards the ID request message to the application server corresponding to the application type, i.e., the target application server.

Block S303: After the target application server receives the ID request message, the target application server resolves and determines whether the ID information of the application server suggested by the terminal and carried in the ID request message is the ID information of the target application server. If the ID information of the application server suggested by the terminal and carried in the ID request message is the ID information of the target application server, the process turns to Block S307; otherwise, the process turns to Block S304.

In this block, the target application server may determine whether the ID request message carries the ID information of the target application server. When such a determination mode is employed, the determination may be made no matter whether the ID request carries the ID information of the application server suggested by the user terminal.

In one example, the ID information of the target application server is sip:correctname@example.com, while the ID information of the application server suggested by the user terminal which is carried in the ID request message received by the application server is sip:wrongname@example.com, therefore the application server may determine that the resolved ID information is inconsistent with the ID information of the application server, in other words, the ID information carried in the ID request message is not the ID information of the application server.

Block S304: The target application server returns the ID information of the target application server to the application server agent.

Block S305: The application server agent forwards the ID information to the user terminal.

Block S306: The user terminal receives and saves the ID information, and the process ends.

Block S307: The target application server returns a correctness response to the application server agent.

Block S308: The application server agent forwards the correctness response to the user terminal.

Block S309: The user terminal takes the ID information of the application server suggested by the user terminal as the ID information of the target application server.

In this embodiment, when the ID information of the application server suggested by the terminal and carried in the ID request message is the ID information of the target application server, the response message which is returned by the target application server to the user terminal may not be the correctness response. For example, the target application server may return the ID information of the target application server to the user terminal. The focus of this process lies in that, when the ID information of the application server suggested by the user terminal and carried in the ID request message is not the ID information of the target application server, the target application server needs to return the ID information of the target application server to the user terminal.

After the user terminal receives the ID information of the target application server, the user terminal may take the ID information as the correct ID information of the target application server, or the user terminal may verify the correctness of the ID information with the target application server again. After the user terminal receives a correctness response from the target application server, the user terminal takes the ID information of the application server as the correct ID information of the target application server. In this embodiment, the process in which the user terminal verifies the obtained ID information of the application server with the application server is the same as that in the first embodiment.

Embodiment 3

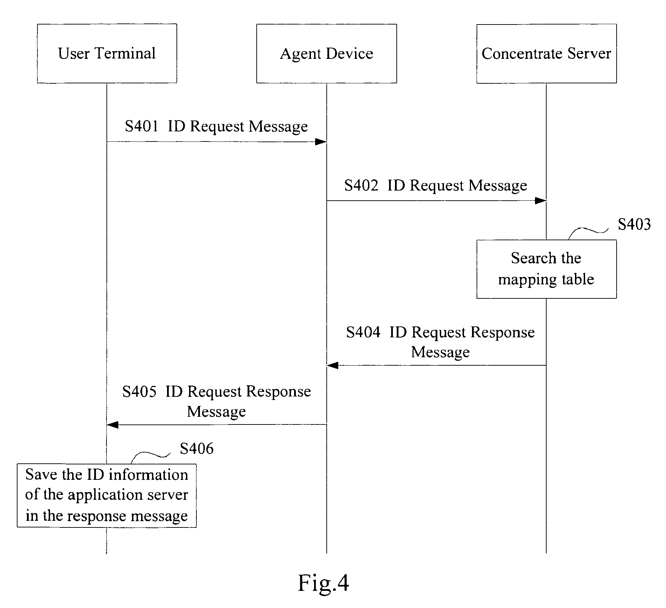

In this embodiment, an operator maintains a concentrate server acts as the second device, and a mapping table indicating the mapping relation between the information of the application type and the ID information of an application server is saved in the second device. A user terminal which acts as the first device may obtain the ID information of the application server from the concentrate server. Figure 4 shows the process in which the user terminal obtains the ID information of the application server, and includes the following blocks.

Block S401: A user terminal sends an ID request message carrying the information of the application type corresponding to the application, to a agent device;

Block S402: After the agent device receives the ID request message, the agent device forwards the ID request message to a concentrate server.

Block S403: After the concentrate server receives the ID request message, the concentrate server resolves the information of the application type carried in the ID request message, searches in the mapping table and obtains the ID information of the application server corresponding to the information of the application type.

Block S404: The concentrate server returns an ID request response message carrying the ID information of the application server, to the agent device.

Block S405: The agent device forwards the response message to the user terminal.

Block S406: After the user terminal receives the response message, the user terminal resolves and saves the ID information of the application server.

In this embodiment, the function of the agent device merely includes forwarding the ID request message and the ID request response message. Therefore, the agent device may not be used during the implementation.

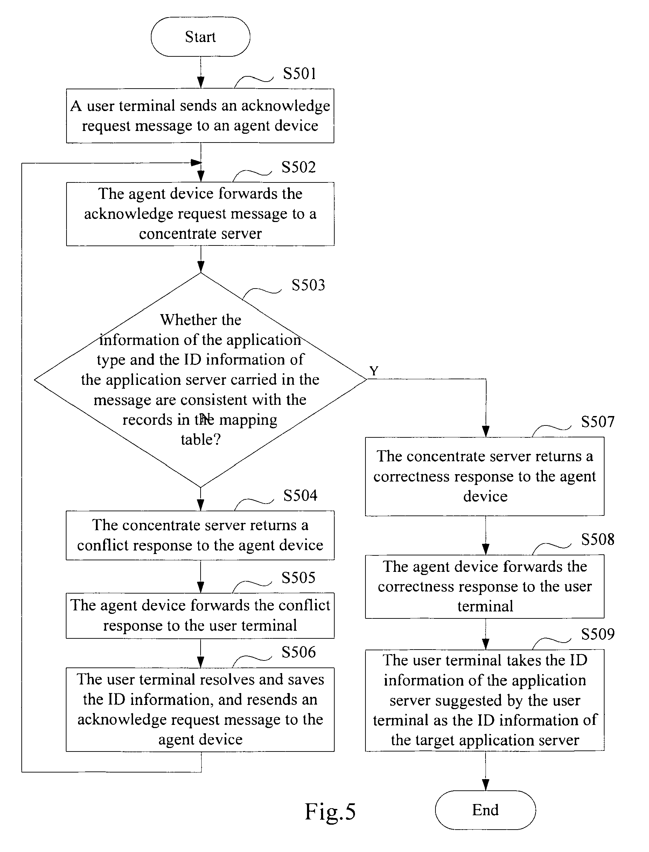

After the user terminal obtains the ID information of the application server, the user terminal may take the ID information of the application server as the correct ID information of the application server corresponding to the application type requested by the user terminal, or the user terminal may verify the application server ID with the concentrate server so as to guarantee the correctness of the ID information of the application server obtained by the user terminal. Figure 5 shows the process of the verifying method, and includes the following blocks.

Block S501: A user terminal sends a verification request message carrying the ID information of the application server received by the user terminal and the information of the application type corresponding to the application, to an agent device.

Block S502: After the agent device receives the verification request message, the agent device forwards the verification request message to a concentrate server.

Block S503: After the concentrate server receives the verification request message, the concentrate server resolves and determines whether the information of the application type and the ID information of the application server carried are consistent with the records in the mapping table. If the information of the application type and the ID information of the application server carried are consistent with the records in the mapping table, the process turns to Block S507; otherwise, the process turns to Block S504.

Block S504: The concentrate server returns a conflict response carrying the ID information of the target application server, to the agent device.

The concentrate server obtains the ID information of the target application server by searching the mapping table according to the information of the application type.

Block S505: The agent device forwards the conflict response to the user terminal.

Block S506: After the user terminal receives the conflict response, the user terminal resolves and saves the ID information of the application server, and resends a verification request message carrying the ID information of the application server resolved by the user terminal and the information of the application type corresponding to the application, to the agent device. Then, the process turns to Block S502.

Block S507: The concentrate server returns a correctness response to the agent device.

Block S508: The agent device forwards the correctness response to the user terminal.

Block S509: The user terminal takes the ID information of the application server suggested by the user terminal as the ID information of the target application server.

Similar to Embodiment 1, in this embodiment, the times that the user terminal is allowed to initiate the verification request may also be limited.

Embodiment 4

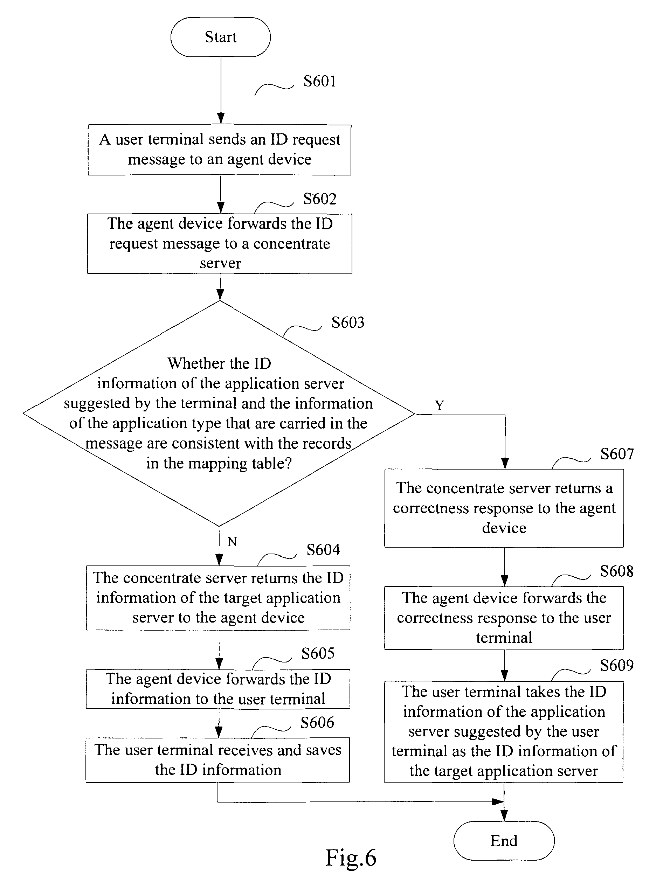

In this embodiment, a user terminal which acts as the first device obtains the ID information of the target application server from a concentrate server which acts as the second device. Moreover, when the user terminal obtains the ID information of the target application server, the user terminal carries the ID information of the application server suggested by the user terminal in the ID request message. Figure 6 shows the process in which the user terminal obtains the ID information of the application server in this embodiment, and includes the following blocks.

Block S601: A user terminal sends an ID request message carrying the information of the application type corresponding to the application and the ID information of the application server suggested by the user terminal, to an agent device.

Block S602: After the agent device receives the ID request message, the agent device forwards the ID request message to a concentrate server.

Block S603: After the concentrate server receives the ID request message, the concentrate server resolves and determines whether the ID information of the application server suggested by the user terminal and the information of the application type which are both carried in the ID request message are consistent with the records in the mapping table. If the ID information of the application server suggested by the user terminal and the information of the application type are consistent with the records in the mapping table, the process turns to Block S607; otherwise, the process turns to Block S604.

Block S604: The concentrate server returns the ID information of the target application server to the agent device.

The concentrate server obtains the ID information of the target application server by searching in the mapping table according to the information of the application type.

Block S605: The agent device forwards the ID information to the user terminal.

Block S606: The user terminal receives and saves the ID information of the application server and the process ends.

Block S607: The concentrate server returns a correctness response to the agent device.

Block S608: The agent device forwards the correctness response to the user terminal.

Block S609: The user terminal takes the ID information of the application server suggested by the user terminal as the ID information of the target application server.

After the user terminal receives a conflict response, the user terminal may take the ID information of the application server carried as the correct ID information of the application server corresponding to the application type requested, or the user terminal may verify the application server ID with the concentrate server so as to guarantee the correctness of the ID information of the application server obtained by the user terminal. The verifying method may be the same as that in Embodiment 3.

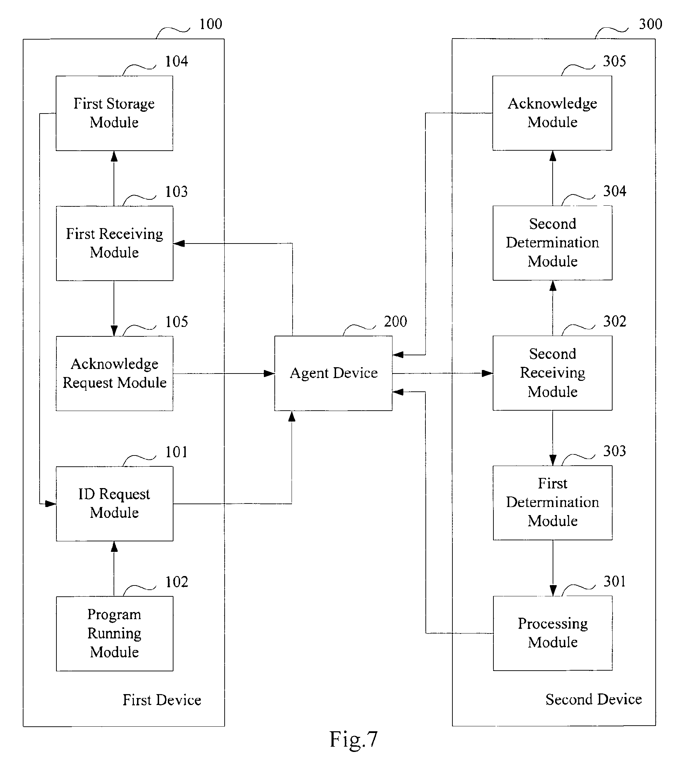

A system for obtaining ID information of an application server according to one embodiment of the invention is as shown in Figure 7. The system includes a first device 100 and a second device 300.

The first device 100 includes an ID request module 101 adapted to send an ID request to the second device 300.

The second device 300 includes a processing module 301 adapted to return ID information of a target application server to the first device 100.

The system may further include an agent device 200 adapted to forward the ID request and ID information of an application server between the first device 100 and the second device 300.

The first device 100 includes:

a program running module 102 adapted to run an application;

the ID request module 101 adapted to send an ID request according to the application run by the program running module 102;

a first receiving module 103 adapted to receive the ID information of the application server; and

a first storage module 104 adapted to save the ID information of the application server received by the first receiving module 103.

During the implementation, the ID request module 101 may obtain the ID information of the application server from the first storage module 104, and carries the ID information of the application server in an ID request for sending.

When the program running module 102 needs to experience a certain service, the program running module 102 may obtain the ID information of the application server from the first storage module 104.

To guarantee the correctness of the ID information of the application server obtained from the first device 100, after the user terminal obtains the ID information of the application server, the first device 100 may verify the correctness of the ID information with the application server. Therefore, in this embodiment, the first device 100 further includes a verification request module 105 adapted to send a verification request to the second device 300 after the first receiving module 103 receives an ID information.

The second device 300 includes:

a second receiving module 302 adapted to receive information;

the processing module 301 adapted to send the ID information of the target application server according to an ID request received by the second receiving module 302.

Because the second device 300 may first determine whether the ID information of the target application server is carried in the received ID request so as to decide to return the ID information of the target application server to the first device 100 or not, in this embodiment, the second device 300 further includes first determination module 303 adapted to determine whether the ID information of the target application server is carried in the ID request received by the second receiving module 302. When no ID information of the target application server is carried in the ID request, the processing module 301 is notified to send the ID information of the target application server.

Corresponding to the verification request module 105 of the first device 100, the second device 300 of this embodiment may further include a second determination module 304 and a verification module 305.

The second determination module 304 is adapted to determine whether the verification request received by the second receiving module 302 carries the ID information of the target application server and notify the verification module 305.

If the notification is that no ID information of the target application server is carried in the verification request, the verification module 305 sends a conflict response; otherwise, the verification module 305 sends a correctness response.

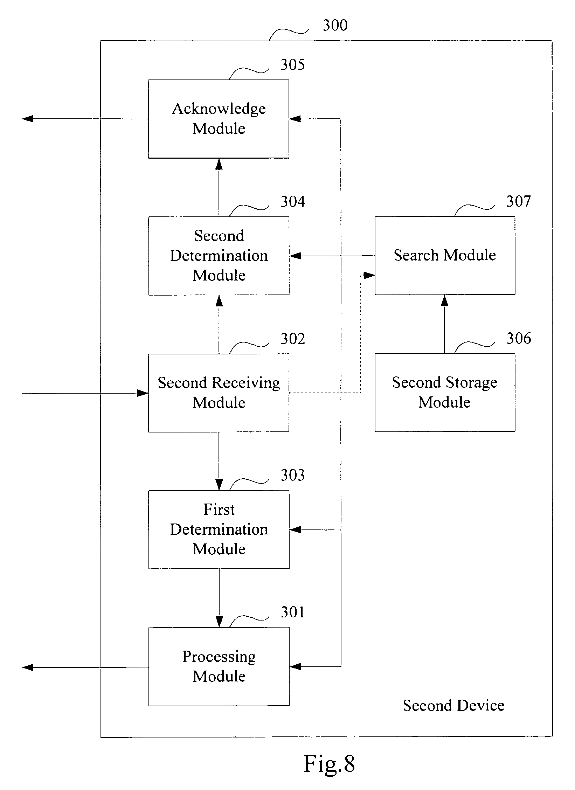

During the specific implementation, the second device 300 may be the target application server, or may be the concentrate server. When the second device 300 is the concentrate server, as shown in Figure 8, the second device further includes:

a second storage module 306 adapted to save a mapping table for identifying the mapping relation between the information of the application type and the ID information of the application server; and

a search module 307 adapted to search the mapping table according to an ID request received by the second receiving module 302, and obtain and output the ID information of the target application server.

When the second device 300 is the concentrate server, each of the processing module 301, first determination module 303, the second determination module 304 and the verification module 305 can obtain the ID information of the target application server from the search module 307.

In conclusion, in the embodiments of the invention, a first device sends an ID request to a second device, and the second device returns the ID information of the target application server to the first device. According to the technical solutions of the embodiments of the invention, by sending an ID request to the second device, the first device may automatically obtain the ID information of the target application server. Therefore, a user does not need to manually input the complex and complicated ID information of the application server when experiencing a service in which the ID information of the corresponding application server needs to be provided, and the user experience satisfaction may be improved.

Additional advantages and modifications will readily occur to those skilled in the art. Therefore, the invention in its broader aspects is not limited to the specific details and representative embodiments shown and described herein. Accordingly, various modifications and variations may be made without departing from scope of the invention as defined by the appended claims and their equivalents.

## Claims

1. A method for obtaining ID information of an application server, comprising:
sending, by a first device, an ID request to a second device; and
returning, by the second device, ID information of a target application server to the first device.

2. The method according to claim 1, wherein the ID request carries the ID information of the application server suggested by the first device, and the method further comprises:
determining, by the second device, whether suggested ID information is the ID information of the target application server after receiving the ID request; if the suggested ID information is not the ID information of the target application server, returning the ID information of the target application server to the first device; and
receiving and saving, by the first device, the ID information of the target application server.

3. The method according to claim 2, wherein, the suggested ID information comprises ID information of an application server saved locally in the first device or ID information of an initial application server of the first device.

4. The method according to claim 1, comprising, directly returning, by the second device, the ID information of the target application server to the first device after receiving the ID request.

5. The method according to claim 1, 2 or 4, comprising:
sending, by the first device, a verification request carrying the ID information received, to the second device after receiving the ID information; and
determining, by the second device, whether the ID information carried in the verification request is correct; if the ID information carried in the verification request is correct, returning a correctness response to the first device; otherwise, returning a conflict response to the first device.

6. The method according to claim 5, wherein the conflict response carries the ID information of the target application server; and the method further comprises: resolving and saving, by the first device, the ID information and resending a verification request to the second device after receiving the conflict response.

7. The method according to claim 1 or 2, wherein, the ID request carries information of an application type requested by the first device.

8. The method according to claim 7, comprising, forwarding the ID request and the ID information of the application server between the first device and the second device via an agent device.

9. The method according to claim 8, comprising, forwarding, by the agent device, the request to the second device according to the information of the application type carried in the ID request, wherein the second device is the target application server corresponding to the application type.

10. The method according to claim 7, comprising:
saving, by the second device, a mapping relation between the information of the application type and the ID information of the application server on the second device; and
obtaining, by the second device, the ID information of the target application server according to the information of the application type and the mapping relation after receiving the ID request.

11. A system for obtaining ID information of an application server, comprising:
a first device, which comprises an ID request module and is adapted to send an ID request to a second device; and
the second device, which comprises a processing module and is adapted to return ID information of a target application server to the first device.

12. The system according to claim 11, wherein, the second device further comprises a first determination module, adapted to determine whether the ID request carries the ID information of the target application server and to notify the processing module to return the ID information of the target application server to the first device when the ID request does not carry the ID information of the target application server.

13. The system according to claim 11, wherein, the first device further comprises:
a first receiving module, adapted to receive the ID information of the application server returned by the second device; and
a first storage module, adapted to save the ID information of the application server received by the first receiving module.

14. The system according to claim 13, wherein, the first device further comprises a verification request module adapted to send a verification request to the second device after the first receiving module receives the ID information.

15. The system according to claim 14, wherein the second device further comprises a second determination module and a verification module, wherein:
the second determination module is adapted to determine whether the verification request carries the ID information of the target application server and notify the verification module;
if the verification module is notified that the verification request does not carry the ID information of the target application server, the verification module sends a conflict response to the first device; otherwise, the verification module sends a correctness response to the first device.

16. The system according to claim 11, wherein, the system further comprises an agent device adapted to forward the ID request and the ID information of the application server between the first device and the second device.

17. The system according to claim 16, wherein:
the second device is the target application server; and
the ID request module carries information of an application type corresponding to the target application server in the ID request and sends the ID request to the agent device, and the agent device forwards the ID request to the second device according to the information of the application type.

18. The system according to claim 11 or 16, wherein, the second device further comprises:
a second storage module, adapted to save a mapping table indicating a mapping relation between the information of the application type and the ID information of the application server; and
a search module adapted to search the mapping table according to the ID request, and obtain and output the ID information of the target application server.

19. A terminal, comprising a module adapted to run an application, wherein, the terminal further comprises an ID request module adapted to send an ID request according to the application.

20. The terminal according to claim 19, wherein, the terminal further comprises:
a first receiving module adapted to receive ID information of an application server; and
a first storage module adapted to save the ID information of the application server received by the first receiving module.

21. The terminal according to claim 20, wherein, the terminal further comprises a verification request module adapted to send a verification request after the first receiving module receives the ID information.

22. A device, comprising a second receiving module adapted to receive information, wherein, the device further comprises a processing module adapted to send ID information of a target application server according to an ID request received by the second receiving module.

23. The device according to claim 22, wherein, the device further comprises a first determination module adapted to determine whether the ID request received by the second receiving module carries the ID information of the target application server, and notify the processing module to send the ID information of the target application server when the ID request does not carry the ID information of the target application server.

24. The device according to claim 22, wherein, the device further comprises a second determination module and a verification module, wherein:
the second determination module is adapted to determine whether a verification request received by the second receiving module carries the ID information of the target application server, and notify the verification module;
if the verification module is notified that the verification request does not carry the ID information of the target application server, the verification module sends a conflict response; otherwise, the verification module sends a correctness response.

25. The device according to claim 22, 23 or 24, wherein, the device is the target application server.

26. The device according to claim 22, 23 or 24, further comprising:
a second storage module, adapted to save a mapping table indicating a mapping relation between information of an application type and ID information of an application server; and
a search module adapted to search the mapping table according to the ID request received by the second receiving module, and obtain and output the ID information of the target application server.
